# EUROPÄISCHE PATENTSCHRIFT

(11) **EP 2 030 117 B1**
(45) Veröffentlichungstag und Bekanntmachung des Hinweises auf die Patenterteilung: **16.06.2010**
(21) Anmeldenummer: 07728191.3
(22) Anmeldetag: 17.04.2007
(51) Int. Cl.: G06F 13/40, H04L 12/40, H04L 12/46

(54) **GATEWAY ZUM DATENTRANSFER ZWISCHEN SERIELLEN BUSSEN**
GATEWAY FOR DATA TRANSFER BETWEEN SERIAL BUSES
PASSERELLE SERVANT À TRANSFÉRER DES DONNÉES ENTRE DES BUS SÉRIE

(30) Priorität: 24.05.2006 DE 102006024888; 24.11.2006 DE 102006055514
(43) Veröffentlichungstag der Anmeldung: 04.03.2009
(73) Patentinhaber: Robert Bosch GmbH, 70442 Stuttgart (DE)
(72) Erfinder: IHLE, Markus, 72127 Jettenburg (DE); TAUBE, Jan, 72760 Reutlingen (DE); LORENZ, Tobias, 72766 Reutlingen (DE)
(86) Internationale Anmeldenummer: PCT/EP2007/053728
(87) Internationale Veröffentlichungsnummer: WO 2007/134920

(56) Entgegenhaltungen:
- WO-A-00/07335
- WO-A1-98/53404

## Beschreibung

Die vorliegende Erfindung betrifft ein Gateway zum Datentransfer zwischen seriellen Bussen, insbesondere zwischen Feldbussen.

Die Vernetzung von Steuergeräten, Sensorik und Aktuatorik mithilfe eines Netzwerkes bzw. Kommunikationssystems bestehend aus einer Kommunikationsverbindung, insbesondere einem Bus, und entsprechenden Kommunikationsbausteinen, hat in den letzten Jahren beim Bau von modernen Kraftfahrzeugen oder auch im Maschinenbau, insbesondere im Werkzeugmaschinenbereich, als auch in der Automatisierung drastisch zugenommen. Synergieeffekte durch Verteilung von Funktionen auf mehrere Teilnehmer, insbesondere Steuergeräte, können dabei erzielt werden. Man spricht hierbei von verteilten Systemen. Solche verteilten Systeme oder Netzwerke bestehen somit aus den Teilnehmern und dem diese Teilnehmer verbindenden Bussystem oder mehreren verbindenden Bussystemen. Die Kommunikation zwischen verschiedenen Stationen bzw. Teilnehmern findet damit mehr und mehr über ein solches Kommunikationssystem, Bussystem oder Netzwerk statt, über welches die zu übertragenden Daten in Botschaften übermittelt werden. Dieser Kommunikationsverkehr auf dem Bussystem, Zugriffs- und Empfangsmechanismen sowie Fehlerbehandlung werden über ein entsprechendes Protokoll geregelt, wobei der Name des jeweiligen Protokolls häufig und so auch hier auch als Synonym für das Netzwerk bzw. das Bussystem selbst verwendet wird.

Als Protokoll beispielsweise im Kfz-Bereich hat sich der CAN-Bus (Controller Area Network) etabliert. Dieses ist ein ereignisgesteuertes Protokoll, d. h. Protokollaktivitäten wie das Senden einer Nachricht werden durch Ereignisse initiiert, die ihren Ursprung außerhalb des Kommunikationssystems haben. Der eindeutige Zugang zum Kommunikationssystem bzw. Bussystem wird über eine prioritätsbasierte Bitarbitrierung gelöst. Eine Vorraussetzung dafür ist, dass den übertragenden Daten und damit jeder Botschaft eine Priorität zugewiesen ist. Das CAN-Protokoll ist sehr flexibel; ein Hinzufügen weiterer Teilnehmer und Botschaften ist damit problemlos möglich, solange es noch freie Prioritäten (Message I-dentifier) gibt. Die Sammlung aller im Netzwerk zu sendenden Botschaften mit Prioritäten und deren sendenden bzw. empfangenden Teilnehmer bzw. den entsprechenden Kommunikationsbausteinen werden in einer Liste, der so genannten Kommunikationsmatrix, abgelegt.

Ein alternativer Ansatz zur ereignisgesteuerten, spontanen Kommunikation ist der rein zeitgesteuerte Ansatz. Alle Kommunikationsaktivitäten auf dem Bus sind strikt periodisch. Protokollaktivitäten wie das Senden einer Botschaft werden nur durch das Fortschreiten einer für das Bussystem gültigen Zeit ausgelöst. Der Zugang zu diesem Medium basiert auf der Zuteilung von Zeitbereichen, in denen ein Sender exklusives Senderecht hat. Dabei ist die Botschaftsreihenfolge in der Regel schon vor Inbetriebnahme festzusetzen. Es wird also ein Fahrplan erstellt, der den Anforderungen der Botschaften bezüglich Wiederholrate, Redundanz, Deadlines usw. genügt. Man spricht vom so genannten Bus-Schedule. Ein solches Bussystem ist beispielsweise der TTP/C.

Eine Verbindung der Vorteile beider genannter Busarten erfolgt im Lösungsansatz des zeitgesteuerten CAN, des so genannten TTCAN (Time Triggered Controller Area Network). Dieser genügt den oben skizzierten Forderungen nach zeitgesteuerter Kommunikation sowie den Forderungen nach einem gewissen Maß an Flexibilität. Der TTCAN erfüllt dies durch den Aufbau der Kommunikationsrunde in so genannten exklusiven Zeitfenstern für periodische Botschaften bestimmter Kommunikationsteilnehmer und in so genannte arbitrierende Zeitfenster für spontane Botschaften mehrerer Kommunikationsteilnehmer. TTCAN basiert dabei im Wesentlichen auf einer zeitgesteuerten, periodischen Kommunikation, die durch einen hauptzeitgebenden Teilnehmer bzw. Kommunikationsbaustein, den so genannten Zeitmaster mit Hilfe einer Zeitreferenznachricht getaktet wird.

Eine weitere Möglichkeit verschiedene Übertragungsarten zu verbinden bietet das FlexRay-Protokoll, wodurch ein schnelles, determinisfisches und fehlertolerantes Bussystem insbesondere für den Einsatz in einem Kraftfahrzeug beschrieben wird. Dieses Protokoll arbeitet nach dem Verfahren des Time-Division-Multiple-Access (TDMA), wobei den Teilnehmern bzw. den zu übertragenden Botschaften feste Zeitschlitze zugewiesen werden, in denen sie einen exklusiven Zugriff auf die Kommunikationsverbindung, den Bus haben. Die Zeitschlitze wiederholen sich dabei in einem festgelegten Zyklus, sodass der Zeitpunkt zu dem eine Botschaft über den Bus übertragen wird, exakt vorausgesagt werden kann und der Buszugriff deterministisch erfolgt. Um die Bandbreite für die Botschaftsübertragung auf dem Bussystem optimal zu nutzen, wird der Zyklus in einen statischen und einen dynamischen Teil unterteilt. Die festen Zeitschlitze befinden sich dabei im statischen Teil am Anfang eines Buszyklusses. Im dynamischen Teil werden die Zeitschlitze dynamisch vergeben. Darin wird nun der exklusive Buszugriff jeweils nur für eine kurze Zeit ermöglicht. Erfolgt kein Zugriff. wird der Zugriff für den nächsten Teilnehmer freigegeben. Diese Zeitspanne wird als Minislot bezeichnet, in der auf den Zugriff des ersten Teilnehmers gewartet wird.

Wie soeben dargestellt gibt es eine Vielzahl unterschiedlicher Übertragungstechnologien und damit Arten von Bussystemen oder Netzwerken. Häufig ist es so, dass mehrere Bussysteme gleicher oder unterschiedlicher Art miteinander verbunden werden müssen. Dazu dient eine Busschnittstelleneinheit, ein so genanntes Gateway. Ein Gateway ist somit eine Schnittstelle zwischen verschiedenen Bussen, die von gleicher oder unterschiedlicher Art sein können, wobei das Gateway Botschaften von einem Bus auf einen oder mehrere andere Busse weiterleitet. Bekannte Gateways bestehen aus mehreren unabhängigen Kommunikationsbausteinen, wobei der Austausch von Botschaften dabei über die Prozessorschnittstelle (CPU-Interface) des jeweiligen Teilnehmers bzw. den entsprechenden Schnittstellenbaustein des jeweiligen Kommunikationsbausteins erfolgt. Dabei wird dieses CPU-Interface durch diesen Datenaustausch zusätzlich zu den zum Teilnehmer selbst zu übertragenden Botschaften stark belastet wodurch sich zusammen mit der sich daraus ergebenden Übertragungsstruktur eine relativ niedrige Datenübertragungsgeschwindigkeit ergibt. Weiterhin gibt es integrierte Kommunikafionscontroller oder Kommunikationsbausteine, die sich einen gemeinsamen Botschaftsspeicher, den so genannten Nachrichtenspeicher bzw. Message-RAM, teilen.

Die Patentschrift WO9853404 offenbart ein Bussystem zum Datenaustausch zwischen Kommunikationsknoten, wobei eine Master-Einheit die Datenübertragung auf dem Bus steuert.

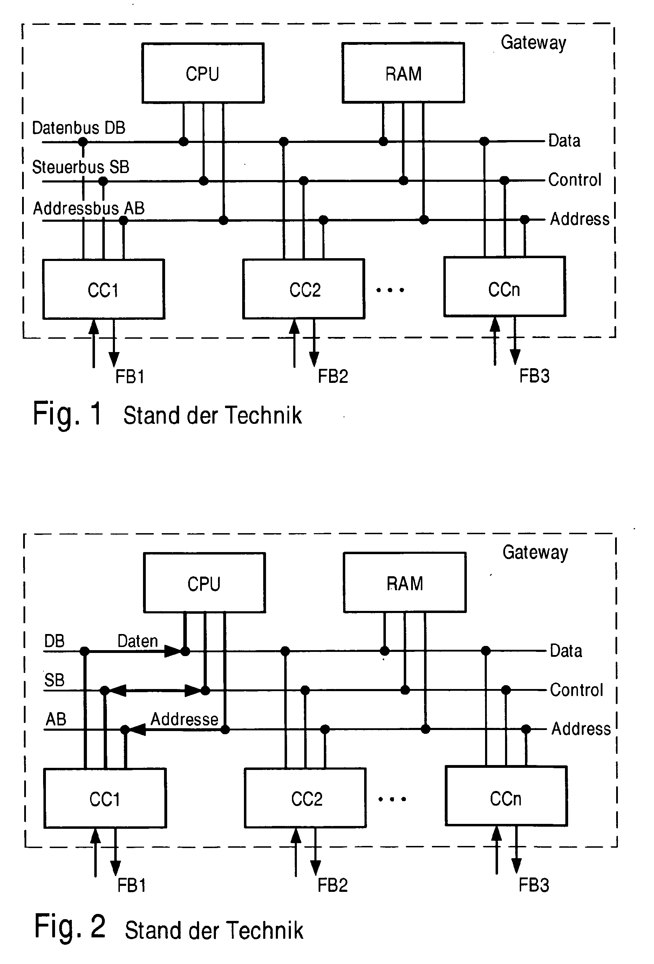

Figur 1 zeigt ein Gateway nach dem Stand der Technik. Das Gateway enthält mehrere Kommunikationsbausteine bzw. Communication Controller CC, die jeweils zum Anschluss eines seriellen Busses vorgesehen sind. Über die seriellen Busse werden Daten paketweise übertragen. Das Gateway enthält einen internen Systembus für den internen Datentransfer, wobei der interne Systembus einen Datenbus DB, einen Steuerbus SB und einen Adressbus AB umfasst. An dem Systembus sind neben den verschiedenen Kommunikationsbausteinen CC, eine Datenverarbeitungseinheit CPU, Datenspeicher RAM und weitere optionale Komponenten angeschlossen. Die CPU konfiguriert, kontrolliert und steuert die einzelnen Kommunikationsbausteine CC. Auf dem internen Datenbus DB werden die Daten wortweise zwischen den verschiedenen Einheiten transferiert. Die Anzahl der in einem Datenwort übertragenen Datenbits entspricht der Busbreite des Datenbusses DB. Bei dem herkömmlichen Gateway, wie es in Figur 1 dargestellt ist, liest die CPU empfangene Nachrichten bzw. Botschaften und bearbeitet sie und erzeugt neue Botschaften. Ferner sorgt die CPU für das Versenden der Botschaften. Bei einfachen Gateway-Operationen werden empfangene Daten aus einem Kommunikationsbaustein CC ausgelesen und in einen anderen oder mehrere weitere Kommunikationsbausteine CC zum Versand eingeschrieben. Wird kein DMA-Controller eingesetzt, transferiert die Host-CPU die Daten wortweise aus den Kommunikationsbausteinen CC in den Datenspeicher RAM oder in einen CPU-internen Datenspeicher, um die Daten zu verarbeiten und anschließend in die entsprechenden Kommunikationsbausteine CC zu kopieren. Der Datenspeicher RAM enthält neben den übertragenen Daten auch einen Bereich zum Abspeichern des von der CPU abzuarbeitenden Programms.

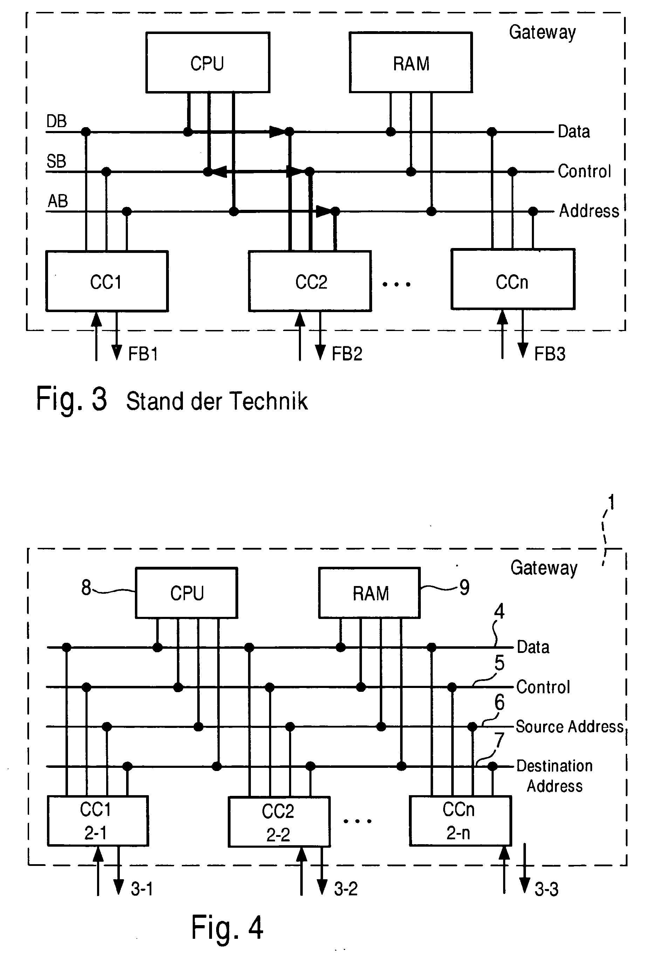

Die Kommunikationsbausteine CC stellen die Verbindung des Gateways zu den einzelnen seriellen Bussystemen dar. Diese Kommunikationsbausteine CC tauschen mit den seriellen Datenbussen Datenpakete aus, welche Header bzw. Verwaltungsdaten und Nutz- bzw. Payload-Daten enthalten. Darüber hinaus weisen die Kommunikationsbausteine CC eine Schnittstelle zu dem Systembus, d. h. zu dem Steuer-, Daten- und Adressbus auf. Die Host-CPU kann über eine passive Schnittstelle auf einer in dem Kommunikationsbaustein CC jeweils enthaltenen Botschaft bzw. Nachrichtenspeicher zugreifen. Der interne Systembus, welcher den Datenbus DB, den Steuerbus SB und den Adressbus AB umfasst, ist mit allen Kommunikationsbausteinen CC des Gateways verbunden. Der Datenbus DB besteht aus Datenleitungen, aus denen Daten von einer an dem Bus angeschlossenen Einheit zu einer anderen Einheit übertragen werden. Die CPU steuert mittels des Steuerbusses SB die Datentransfers. Der Adressbus AB dient zur Selektierung der Daten, die aus einem Kommunikationsbaustein CC ausgelesen werden bzw. bei einem Kommunikationsbaustein eingeschrieben werden. Die CPU empfängt oder sendet Daten mittels eines internen CPU-Datenregisters. Die Figuren 2, 3 verdeutlichen den Ablauf eines Datentransfers bei einem herkömmlichen Gateway nach dem Stand der Technik. Bei dem in den Figuren 2, 3 dargestellten Beispiel werden Daten von einem seriellen Feldbus FB1 zu einem seriellen Feldbus FB2 transferiert. Zunächst erfolgt, wie in Figur 2 dargestellt, ein Lesezugriff der CPU auf den Kommunikationsbaustein CC1, der an den seriellen Bus FB1 angeschlossen ist. Die CPU selektiert die zu lesenden Daten, indem sie eine Adresse über den Adressbus AB anlegt und die entsprechenden Steuersignale an den Steuerbus SB abgibt. Der Kommunikationsbaustein CC1 empfängt Daten, die in Datenpakete DP verpackt sind, über den seriellen Feldbus FB1 und gibt die selektierten Daten in einen oder mehreren Datenworten DW auf den internen Datenbus DB ab und signalisiert dies den der CPU entsprechenden Statusleitungen des Steuerbusses SB. Die CPU übernimmt die Daten, die auf dem Datenbus DB anlegen, und speichert sie in einem internen Register der CPU. Danach werden die Steuersignale auf dem Steuerbus SB wieder zurückgesetzt.

In einer zweiten Phase werden dann die in das CPU-Register übertragenen Daten an den zweiten Kommunikationsbaustein CC2 transferiert. In dem zweiten Bustransfer werden die aus den Kommunikationsbausteinen 1 ausgelesenen Daten aus dem internen Register der CPU zu dem zweiten Kommunikationsbaustein CC2 übertragen. Hierzu legt die CPU die zu übertragenden Daten auf den Datenbus DB und selektiert die entsprechende Zieladresse des zweiten Kommunikationsbausteins. Anschließend startet die CPU den Datentransfer durch das Setzen entsprechender Steuerleitungen des Steuerbusses SB. Der zweite Kommunikationsbaustein CC2 übernimmt die an den Datenbus angelegten Daten und signalisiert dies der CPU wiederum mittels Statusleitungen des Steuerbusses SB. Die CPU setzt daraufhin die Steuerleitungen, Datenleitungen und Adressleitungen wieder zurück. Auch der zweite Kommunikationsbaustein CC2 setzt die Steuersignale an den Statusleitungen zurück.

Wie man aus den Figuren 2, 3 erkennen kann, erfolgt bei einem herkömmlichen Gateway ein Datentransfer von einem ersten Feldbus FB1 zu einem zweiten Feldbus FB2 in zwei Phasen, nämlich in einem Lesevorgang, bei dem Daten von dem ersten Kommunikationsbaustein 1 durch die CPU ausgelesen werden, und in einem Schreibvorgang, bei dem die ausgelesenen Daten anschließend in den zweiten Kommunikationsbaustein CC2 eingeschrieben werden.

Ein Nachteil bei der herkömmlichen Vorgehensweise zur Übertragung von Daten mit dem herkömmlichen in Figur 1 dargestellten Gateway nach dem Stand der Technik besteht darin, dass ein Datentransfer zwischen zwei seriellen Feldbussen FB1, FB2 relativ lange dauert bzw. die zu dem Datentransfer benötigte Latenzzeit relativ hoch ist. Ein weiterer Nachteil des herkömmlichen Gateways besteht darin, dass der Datentransfer über die CPU erfolgt, d. h. die CPU wird bei dem Datentransfer belastet und kann keine anderen Datenverarbeitungsoperationen während dieser Zeit durchführen.

Es ist daher die Aufgabe der vorliegenden Erfindung, ein Gateway zum Datentransfer zwischen seriellen Bussen zu schaffen, das sehr geringe Latenzzeiten für einen Datentransfer zwischen seriellen Bussen aufweist.

Diese Aufgabe wird erfindungsgemäß durch ein Gateway mit den im Patentanspruch 1 angegebenen Merkmalen gelöst.

Die Erfindung schafft ein Gateway zum Datentransfer zwischen seriellen Bussen mit:
- mehreren Kommunikationsbausteinen, die jeweils zum Anschluss eines seriellen Busses vorgesehen sind und eine Umsetzung zwischen Datenpaketen und Datenworten durchführen,
- einem Bus-Master, der über einen internen Steuerbus einen wortweisen Transfer von Daten über einen internen Datenbus zwischen zwei Kommunikationsbausteinen steuert,
wobei der Bus-Master eine Quelladresse über einen Quelladressbus an einen intern sendenden ersten Kommunikationsbaustein und eine Zieladresse über einen separaten Zieladressbus an einen intern empfangenden zweiten Kommunikationsbaustein anlegt,
wobei Daten, welche von dem ersten Kommunikationsbaustein über einen daran angeschlossenen ersten seriellen Bus in Datenpaketen empfangen werden, von dem ersten Kommunikationsbaustein direkt ohne Zwischenspeicherung wortweise über den internen Datenbus an den zweiten Kommunikationsbaustein transferiert werden, der diese transferierten Daten in Datenpaketen über einen an den zweiten Kommunikationsbaustein angeschlossenen zweiten seriellen Bus versendet.

Bei einer Ausführungsform bestehen die seriellen Busse aus Feldbussen FB.

Bei einer Ausführungsform des erfindungsgemäßen Gateways ist der serielle Bus ein Ethernet-Bus.

Bei einer Ausführungsform des erfindungsgemäßen Gateways wird der Bus-Master durch einen Prozessor gebildet.

Bei einer Ausführungsform des erfindungsgemäßen Gateways ist der Bus-Master ein DMA-Controller.

Bei einer Ausführungsform des erfindungsgemäßen Gateways ist der Bus-Master eine FSM (Finite State Machine).

Bei einer Ausführungsform des erfindungsgemäßen Gateways erfolgt der direkte Datentransfer von dem ersten Kommunikationsbaustein zu dem zweiten Kommunikationsbaustein innerhalb eines einzigen Taktzyklus.

Bei einer Ausführungsform des erfindungsgemäßen Gateways sind an die seriellen Busse jeweils Aktoren und Sensoren angeschlossen.

Bei einer Ausführungsform des erfindungsgemäßen Gateways weist der interne Datenbus mehrere parallele Datenleitungen zur Übertragung eines Datenwortes auf.

Im Weiteren werden bevorzugte Ausführungsformen des erfindungsgemäßen Gateways unter Bezugnahme auf die beigefügten Figuren zur Erläuterung erfindungswesentlicher Merkmale beschrieben.

Es zeigen:
- Figur 1:: ein Blockschaltbild eines Gateways nach dem Stand der Technik;
- Figur 2:: ein Blockdiagramm eines Gateways zur Erläuterung eines internen Le- sevorgangs bei dem herkömmlichen Gateway gemäß Figur 1;
- Figur 3:: ein Blockdiagramm zur Darstellung eines internen Schreibvorgangs bei dem herkömmlichen Gateway nach dem Stand der Technik gemäß Figur 1;
- Figur 4:: ein Blockdiagramm einer Ausführungsform des erfindungsgemäßen Ga- teways;
- Figur 5:: ein Blockdiagramm zur Erläuterung eines Datentransfers bei dem in Fi- gur 4 dargestellten erfindungsgemäßen Gateway.

Figur 4 zeigt eine Ausführungsform des erfindungsgemäßen Gateways 1 zum Datentransfer zwischen verschiedenen seriellen Bussen. Das Gateway 1 weist mehrere Kommunikationsbausteine 2 auf, die jeweils zum Anschluss eines seriellen Busses 3 vorgesehen sind. Bei den seriellen Bussen 3 kann es sich beispielsweise um Feldbusse handeln. Alternativ kann es sich bei seriellen Bussen auch um Ethernet-Busse handeln. Mögliche serielle Feldbusse sind ein CAN-Bus, ein FlexRay-Bus, ein MOST-Bus oder ein LIN-Bus. Über die seriellen Busse 3-i werden die Daten paketweise übertragen, wobei die übertragenen Datenpakete Verwaltungs- bzw. Header-Daten und Nutzdaten- bzw. Payload-Daten umfassen. Das erfindungsgemäße Gateway hat einen internen Systembus, der einen internen Datenbus 4, einen internen Steuerbus 5, einen Quelladress-Bus 6 und einen Zieladress-Bus 7 umfasst. An den Systembus ist mindestens eine Datenverarbeitungseinheit 8 in Form eines Prozessors und ein Datenspeicher 9 angeschlossen. Die CPU 8 bildet den Bus-Master für den internen Systembus. Das erfindungsgemäße Gateway 1 enthält zwei voneinander getrennte Adress-Busse, nämlich einen Quelladress-Bus 6 und einen Zieladress-Bus 7. Die CPU steuert als Bus-Master über den internen Steuerbus 5 einen wortweisen Transfer von Daten über den internen Datenbus 4 zwischen zwei Kommunikationsbausteinen 2. Dabei legt die CPU 8 als Bus-Master eine Quelladresse über den Quelladress-Bus 6 an einen internen sendenden ersten Kommunikationsbaustein 2 und eine Zieladresse über den separaten Zieladress-Bus 7 an einen intern empfangenen zweiten Kommunikationsbaustein an. Soll beispielsweise ein Datentransfer von dem ersten seriellen Feldbus 3-1 zu dem zweiten seriellen Feldbus 3-2 erfolgen, werden die an den ersten seriellen Bus 3-1 empfangenen Datenpakete durch den ersten Kommunikationsbaustein 2-1 in Datenworte umgesetzt. Diese Datenworte werden über den internen Datenbus 4 von dem Quell-Kommunikationsbaustein 2-1 an den Ziel-Kommunikationsbaustein 2-2 transferiert und dort zu Datenpaketen zusammengesetzt, die über den zweiten seriellen Bus 3-2 übertragen werden. Der Datentransfer erfolgt dabei über den internen Datenbus 4 direkt ohne Zwischenspeicherung in der CPU 8. Der Datentransfer wird lediglich durch die CPU 8 als Bus-Master über den Steuerbus 5 gesteuert. Die CPU 8 selektiert den sendenden Kommunikationsbaustein 2-1 durch Anlegen der entsprechenden Quelladresse an dem Quelladress-Bus 6 und selektiert den empfangenden Kommunikationsbaustein 2-2 durch Anlegen einer Zieladresse an dem Zieladress-Bus 7.

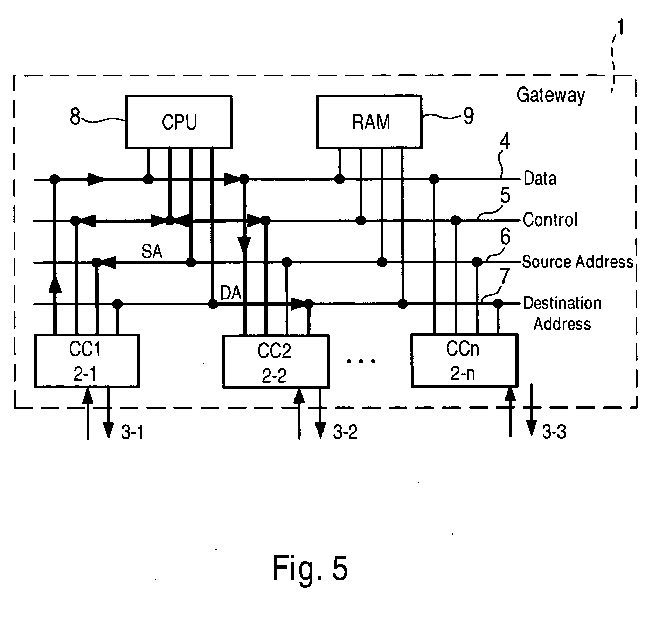

Figur 5 verdeutlicht den Datentransfer von Daten von einem ersten Feldbus 3-1 und einem zweiten Feldbus 3-2. Die CPU 8 selektiert den Kommunikationsbaustein 2-1 durch Anlegen der Source-Adresse SA an den internen Source-Adressbus 6 und den zweiten Kommunikationsbaustein 2-2 durch Anlegen einer Zieladresse DA an den Zieladress-Bus 7. Der Datentransfer der Datenworte DW über den internen Datenbus 4 erfolgt direkt ohne Zwischenspeicherung in der CPU 8. Der Datentransfer zwischen den beiden Kommunikationsbausteinen 2-1, 2-2 erfolgt in einem einzigen Bustransferschritt.

Bei einer Ausführungsform des erfindungsgemäßen Gateways 1 erfolgt der Bustransfer innerhalb eines einzigen Taktzyklus der getakteten CPU.

Durch die Verwendung zweier getrennter Adressbusse 6, 7 ist ein direkter Datentransfer zwischen zwei Kommunikationsbausteinen 2i, 2j ohne Zwischenspeicherung möglich. Das erfindungsgemäße Gateway 1 halbiert die Latenzzeit bei einem Datentransfer. Ein weiterer Vorteil des erfindungsgemäßen Gateways 1 besteht darin, dass die Busauslastung bei gleicher Anzahl von Datentransfer ebenfalls halbiert wird, sodass mehr Busreserven durch die geringere Busauslastung zur Verfügung stehen.

## Patentansprüche

1. Gateway zum Datentransfer zwischen seriellen Bussen (3) mit:
(a) mehreren Kommunikationsbausteinen (2), die jeweils zum Anschluss eines seriellen Busses (3) vorgesehen sind und eine Umsetzung zwischen Datenpaketen (DP) und Datenworten (DW) durchführen;
(b) einem Bus-Master (8), der über einen internen Steuerbus (5) einen wortweisen Transfer von Daten über einen internen Datenbus (4) zwischen zwei Kommunikationsbausteinen (2) steuert,
wobei der Bus-Master (8) eine Quelladresse (SA) über einen Quelladressbus (6) an einen intern sendenden ersten Kommunikationsbaustein (2-1) und eine Zieladresse (DA) über einen separaten Zieladressbus (7) an einen intern empfangenden zweiten Kommunikationsbaustein (2-2) anlegt;
(c) wobei Daten, welche von dem ersten Kommunikationsbaustein (2-1) über einen daran angeschlossenen ersten seriellen Bus (3-1) in Datenpaketen (DP) empfangen werden, von dem ersten Kommunikationsbaustein (3-1) direkt ohne Zwischenspeicherung wortweise über den internen Datenbus (4) an den zweiten Kommunikationsbaustein (2-2) in einen oder mehreren Datenworten transferiert werden, der diese transferierten Daten in Datenpaketen (DP) über einen an den zweiten Kommunikationsbaustein (2-2) angeschlossenen zweiten seriellen Bus (3-2) versendet.

2. Gateway nach Anspruch 1,
wobei der serielle Bus (3) ein Feldbus ist.

3. Gateway nach Anspruch 1,
wobei der serielle Bus (3) ein Ethernet-Bus ist.

4. Gateway nach Anspruch 1,
wobei der Bus-Master (8) ein Prozessor ist.

5. Gateway nach Anspruch 1,
wobei der Bus-Master (8) ein DMA-Controller ist.

6. Gateway nach Anspruch 1,
wobei der Bus-Master (8) eine FSM (Finite State Machine) ist.

7. Gateway nach Anspruch 1,
wobei der direkte Datentransfer von dem ersten Kommunikationsbaustein (2-1) zu dem zweiten Kommunikationsbaustein (2-2) innerhalb eines Taktzyklusses erfolgt.

8. Gateway nach Anspruch 1,
wobei an die seriellen Busse (3) jeweils Aktoren und Sensoren angeschlossen sind.

9. Gateway nach Anspruch 1,
wobei der interne Datenbus (4) mehrere parallele Datenleitungen zur Übertragung eines Datenwortes aufweist.

## Claims

1. Gateway for the transfer of data between serial buses (3) having:
(a) a plurality of communication chips (2) which are respectively provided for the purpose of connecting a serial bus (3) and perform conversion between data packets (DP) and data words (DW);
(b) a bus master (8) which uses an internal control bus (5) to control word-by-word transfer of data via an internal data bus (4) between two communication chips (2),
wherein the bus master (8) applies a source address (SA) via a source address bus (6) to an internally sending first communication chip (2-1) and a destination address (DA) via a separate destination address bus (7) to an internally receiving second communication chip (2-2);
(c) wherein data which are received in data packets (DP) by the first communication chip (2-1) via a first serial bus (3-1) connected thereto are transferred from the first communication chip (3-1) word by word directly without buffer-storage to the second communication chip (2-2) via the internal data bus (4) in one or more data words, and said second communication chip sends these transferred data in data packets (DP) via a second serial bus (3-2) which is connected to the second communication chip (2-2).

2. Gateway according to Claim 1,
wherein the serial bus (3) is a field bus.

3. Gateway according to Claim 1,
wherein the serial bus (3) is an Ethernet bus.

4. Gateway according to Claim 1,
wherein the bus master (8) is a processor.

5. Gateway according to Claim 1,
wherein the bus master (8) is a DMA controller.

6. Gateway according to Claim 1,
wherein the bus master (8) is an FSM (Finite State Machine).

7. Gateway according to Claim 1,
wherein the direct data transfer from the first communication chip (2-1) to the second communication chip (2-2) is effected within one clock cycle.

8. Gateway according to Claim 1,
wherein the serial buses (3) each have actuators and sensors connected to them.

9. Gateway according to Claim 1,
wherein the internal data bus (4) has a plurality of parallel data lines for transmitting a data word.

## Revendications

1. Portail de transfert de données entre des bus série (3), présentant :
(a) plusieurs modules de communication (2) tous prévus pour être raccordés à un bus série (3) et pour exécuter une conversion entre des paquets de données (DP) et des mots de données (DW),
(b) un maître de bus (8) qui commande par un bus interne de commande (5) le transfert mot à mot de données par un bus interne de données (4) entre deux modules de communication (2),
le maître de bus (8) appliquant une adresse de source (SA) par un bus (6) d'adresses de source sur un premier module de communication (2-1) qui émet en interne et une adresse de cible (DA) par un bus (7) séparé d'adresses de cible sur un deuxième module de communication (2-2) qui reçoit en interne,
(c) des données reçues en paquets de données (DP) par le premier module de communication (2-1) par un premier bus série (3-1) qui lui est raccordé sont transférées directement par le premier module de communication (3-1) sans mise en mémoire intermédiaire, mot à mot et en un ou plusieurs mots de données au deuxième module de communication (2-2) par le bus interne de données (4) qui envoie ces données transférées en paquets de données (DP) sur un deuxième bus série (3-2) raccordé au deuxième module de communication (2-2).

2. Portail selon la revendication 1, dans lequel le bus série (3) est un bus de terrain.

3. Portail selon la revendication 1, dans lequel le bus série (3) est un bus Ethernet.

4. Portail selon la revendication 1, dans lequel le maître de bus (8) est un processeur.

5. Portail selon la revendication 1, dans lequel le maître de bus (8) est un contrôleur DMA.

6. Portail selon la revendication 1, dans lequel le maître de bus (8) est une FSM ("Finite State Machine" - machine à états finis).

7. Portail selon la revendication 1, dans lequel le transfert direct de données entre le premier module de communication (2-1) et le deuxième module de communication (2-2) s'effectue pendant un cycle d'horloge.

8. Portail selon la revendication 1, dans lequel des actionneurs et des détecteurs sont raccordés aux bus série (3).

9. Portail selon la revendication 1, dans lequel le bus interne de données (4) présente plusieurs conducteurs de données parallèles qui transmettent un mot de données.
